# EUROPEAN PATENT SPECIFICATION

(11) **EP 4 364 114 B1**
(45) Date of publication and mention of the grant of the patent: **07.05.2025**
(21) Application number: 22735430.5
(22) Date of filing: 27.06.2022
(51) Int. Cl.: G07C 9/00, G06Q 10/04

(54) **PROVIDING ACCESS TO A VEHICLE**
BEREITSTELLUNG DES ZUGANGS ZU EINEM FAHRZEUG
FOURNITURE D'ACCÈS À UN VÉHICULE

(30) Priority: 29.06.2021 SE 2150830
(43) Date of publication of application: 08.05.2024
(73) Proprietor: Assa Abloy Limited, Willenhall, West Midlands WV13 3PW (GB)
(72) Inventor: BISHOP, John, Concord, North Carolina 28025 (US); WINNER, Duncan, Weston Underwood MK46 5LA (GB); HOLMAN, Monica, Bedford Bedfordshire MK41 8NJ (GB)
(74) Representative: Kransell & Wennborg KB
(86) International application number: PCT/EP2022/067555
(87) International publication number: WO 2023/274953

(56) References cited:
- EP-A2- 1 006 490
- AT-U1- 14 936
- US-A1- 2009 313 121
- ANONYMOUS: "Database - Wikipedia", 30 December 2016 (2016-12-30), XP055509953, Retrieved from the Internet <URL:https://en.wikipedia.org/w/index.php?title=Database&oldid=757392515> [retrieved on 20180926]

## Description

### TECHNICAL FIELD

The present disclosure relates to the field of vehicle access and in particular to selecting an access to an appropriate vehicle and providing access to the vehicle by requesting release of one or more appropriate keys.

### BACKGROUND

EP 1 006 490 A1 discloses a vehicle rental terminal with an associated key safe.

For some car dealers, there are a great number of vehicles for sale, e.g. in what is sometimes referred to as car supermarkets. Due to a restricted amount of parking space, some vehicles are often blocked in by other vehicles.

When a potential customer wants to test drive a vehicle, this can result in several vehicles needing to be moved to allow access to the vehicle for a test drive.

The blocking vehicles cause problems for test drives and can even make some potential customers go elsewhere if it takes too long to start the test drive.

### SUMMARY

One object is to improve how vehicles are selected and provided access for.

According to a first aspect, it is provided a method for providing access to a vehicle according to appended claim 1.

The determining the number of blocking vehicles may comprise, for each one of the candidate vehicles: determining blocking parking bays that, if occupied, would block the respective candidate vehicle; and determining how many of the blocking parking bays are occupied with a vehicle.

The key release signal also requests to release keys for the blocking vehicles that block access for the selected vehicle.

According to a second aspect, it is provided a vehicle determination device, for providing access to a vehicle, according to appended claim 3.

The instructions to determine the number of blocking vehicles may comprise instructions that, when executed by the processor, cause the vehicle determination device, to, for each one of the candidate vehicles: determine blocking parking bays that, if occupied, would block the respective candidate vehicle; and determine how many of the blocking parking bays are occupied with a vehicle.

The key release signal also requests to release keys for the blocking vehicles that block access for the selected vehicle.

According to a third aspect, it is provided a computer program for providing access to a vehicle according to claim 5.

According to a fourth aspect, it is provided a computer program product comprising a computer program according to the third aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Fig 2 is a flow chart illustrating embodiments of methods for determining a vehicle;
Fig 3 is a schematic diagram illustrating components of the vehicle determination device of Fig 1 according to one embodiment; and
Fig 4 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

Embodiments presented herein allow intelligent selection of a vehicle that matches a set of vehicle parameters, e.g. as specified by a potential vehicle buyer. The selection is based on determining the number of vehicles blocking each candidate vehicle, where each candidate vehicle is one that matches the set of vehicle parameters. A database stores, for each candidate vehicle, the parking bay in which it is stored. For each parking bay, it is also stored what parking bays are blocking parking bays. Based on occupancy of blocking parking bays, a vehicle determination device can thus derive, for each candidate vehicle, how many currently parked other vehicles there are that block access. The candidate vehicle with fewest blocking vehicles is selected and a key release signal is transmitted to a key cabinet to release a physical key for the selected vehicle.

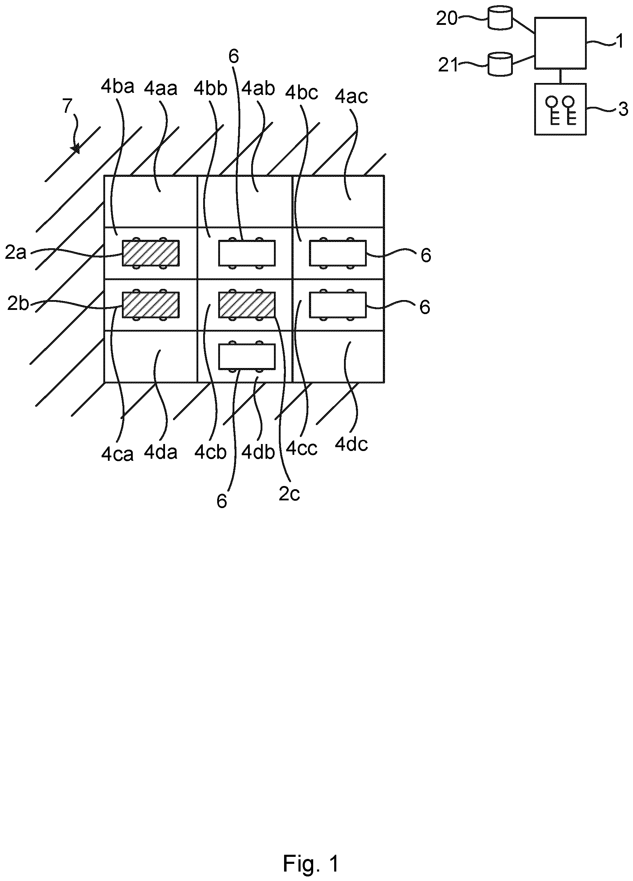

Fig 1 is a schematic diagram illustrating an environment in which embodiments presented herein can be applied. The context is a car dealership, offering a number of vehicles for sale. A limited parking space 7 is available, whereby the vehicles need to be parked (at least sometimes) such a manner that some vehicles are blocked by other vehicles, whereby blocking vehicle need to be moved for access to an inner vehicle for test drive and/or examination by a potential customer. In this example there are twelve parking bays 4aa-4dc, but the embodiments presented herein can be applied for any number of parking bays, as long as there is risk for blocking vehicles at least part of the time. For the reference numerals for the parking bays in the example of Fig 1, the format is 4ij, where i designates the row (in the range a to d) and j designates the column (in the range a to c).

When a potential customer wants to test drive a vehicle, a set of parameters defining the desired vehicle are specified. The set of parameters can include one or more parameters. One parameter can be the manufacturer, e.g. Volkswagen, Ford or Volvo. One parameter can be the model (which is a subset of the manufacturer), e.g. VW Golf, Ford Ka or Volvo XC40. One or more parameters can relate to equipment, e.g. leather upholstery, engine model, sunroof, paint colour, etc. The desired vehicle does not always need to be specified with the same granularity. For instance, one potential customer might have the desired vehicle defined broadly, e.g. VW Golf, and another potential customer might have the desired vehicle defined more narrowly e.g. VW Golf 2.0 Diesel with leather interior and a sunroof.

A vehicle determination device 1 is provided for determining a vehicle based on the set of parameters indicating the desired vehicle. The vehicle determination device 1 has access to a first database 20 and a second database 21. The first database 20 contains details about vehicles, allowing candidate vehicles to be determined based on the set of parameters of the desired vehicle, where each candidate vehicle matches the set of parameters. The second database 21 contains data of parking bay layout, indicating for each parking bay what parking bays are blocking (if occupied). Moreover, the second database 21 contains information about occupancy of parking bays, including an identity of each vehicle and an identity of the parking bay in which the vehicle is parked. Each one of the databases 20, 21 can be implemented in the form of a single or multiple tables in one or more relational databases, files on a file system or any other suitable digital representation (e.g. object database, graph database, etc.) of data enabling the functionality of embodiments presented herein. The first and second databases 20, 21 can be located locally with the vehicle determination device 1 or on a remote server (also known as the cloud). Alternatively the first and second databases can be comprised in a data memory of the vehicle determination device 1. The first and second databases 20, 21 can be implemented in separate physical devices or provided as separate data structures within a single device.

The vehicle determination device 1 is also connected to an automated key cabinet 3 that contains the physical keys of the vehicles that are parked in the parking space 7. The automated key cabinet 3 can controllably release any of the keys, to allow access to any of the parked vehicles using the released physical key. Optionally, the vehicle determination device 1 and the automated key cabinet 3 are combined in a single device.

In this example, there are eight vehicles parked in the parking bays. A potential customer expresses the set of parameters of her desired vehicle, e.g. a Volvo XC40 plug-in-hybrid. The set of parameters can be provided to the vehicle determination device 1 using an application executing on a user device (e.g. smart phone) of the potential customer or sales representative.

The vehicle determination device 1 queries the first database 20 to obtain a set of candidate vehicles 2a-c, matching the set of parameters. The candidate vehicles 2a-c are indicated with dashed filling in Fig 1.

For each candidate vehicle, the vehicle determination device 1 queries the second database 21 to find out the parking bays that are blocking if occupied, and the number of parked vehicles in those parking bays. In this example, a first candidate vehicle 2a has two blocking vehicles 6, a second candidate vehicle 2b has two blocking vehicles 2c, 6 and a third candidate vehicle 2c has one blocking vehicle.

Hence in this situation, the third candidate vehicle 2c has the fewest number of blocking vehicles (of the candidate vehicles 2a-c). The vehicle determination device 1 thereby selects the third candidate vehicle 2c and transmits a signal to the automated key cabinet 3 to release the physical key for the third candidate vehicle 2c. Additionally, the vehicle determination device 1 transmits a signal to the automated key cabinet 3 to release the physical key for the blocking vehicle 6. The sales representative conveniently takes the keys, moves the blocking vehicle 6 and takes out the selected (third candidate) vehicle 2c, allowing the potential customer to examine the vehicle and take it for a test drive.

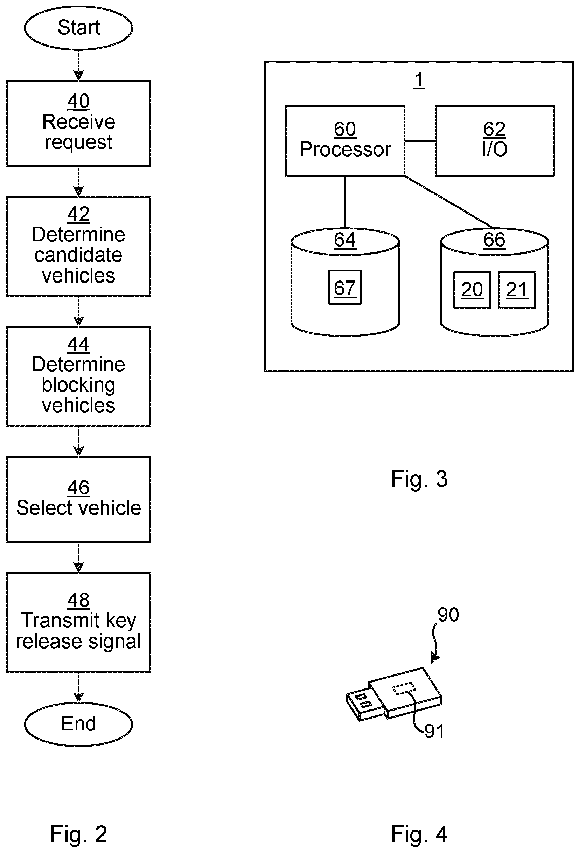

Fig 2 is a flow chart illustrating embodiments of methods for determining a vehicle. The method is performed by a vehicle determination device, such as the vehicle determination device shown in Fig 1.

In a *receive request* step 40, the vehicle determination device 1 receiving 40 a request signal, indicating a set of parameters of a desired vehicle. The set of parameters can be entered by the potential customer or told by the potential customer to a sales representative that enters the set of parameters. The set of parameters can be entered in an application running on a user device (such as a smartphone, tablet computer, laptop or stationary computer) or the set of parameters can be entered using a user interface of the vehicle determination device 1.

In a *determine candidate vehicles* step 42, the vehicle determination device 1 determines, from a first database 20, a plurality of candidate vehicles 2a-c matching the parameters of the desired vehicle.

In a *determine blocking vehicles* step 44, the vehicle determination device 1 determines, from a second database 21, for each one of the candidate vehicles 2a-c, a number of blocking vehicles 6 blocking access to the respective candidate vehicle.

This step optionally comprises, for each one of the candidate vehicles (2a-c), performing two sub-steps.

In a first sub-step, the vehicle determination device 1 determines blocking parking bays that, if occupied, would block the respective candidate vehicle. In a second sub-step, the vehicle determination device 1 determines how many of the blocking parking bays are occupied with a parked vehicle.

In a *select vehicle* step 46, the vehicle determination device 1 selects the candidate vehicle with the fewest number of blocking vehicles. Optionally, if there are multiple candidate vehicles with the same lowest number of blocking vehicles, a list of these candidate vehicles with all specifications can be provided as output, allowing the potential customer to select the candidate vehicle that is preferred.

Optionally, the selection is based also a locality of where the keys are stored for the blocking vehicles. This is here illustrated in a couple of examples:

In a first example, there is a first candidate vehicle with three blocking vehicles and the three keys are all stored in the same automated key cabinet that is near the user device. There is also a second candidate vehicle with only two blocking vehicles for which keys are stored in two different automated key cabinets that are far apart from each other. In this case, the first vehicle can be selected even though it has more blocking vehicles.

In a second example, one of the keys for a blocking vehicle is held by someone and may not thus be immediately retrievable (i.e. someone parked a vehicle blocking others but did not return the key to the automated key cabinet yet). In this case, it can be beneficial to select a vehicle that is not blocked by that blocking vehicle, even if this results in a larger number of blocking vehicle for the selected vehicle.

In one embodiment, the user is already holding one or more vehicle keys needed for the blocking vehicles. This fact can be considered by vehicle determination device 1 in the selection of vehicle.

In a *transmit key release signal* step 48, the vehicle determination device 1 transmits a signal to release a physical key to the selected vehicle. The key release signal also requests to release keys for the blocking vehicles that block access for the selected vehicle. In this case, the key release signal can be transmitted in a single signal or over multiple sub-signals for this purpose.

By selecting car based on model and number of blocking cars, the test drive can be arranged with minimum inconvenience and wait time.

Fig 3 is a schematic diagram illustrating components of the vehicle determination device 1 of Fig 1 according to one embodiment. A processor 60 is provided using any combination of one or more of a suitable central processing unit (CPU), graphics processing unit (GPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Fig 2 above.

The memory 64 can be any combination of random-access memory (RAM) and/or read-only memory (ROM). The memory 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM. Optionally, the data memory comprises the first database 20, containing vehicle details and the second database 21 containing data of parking bay layout and occupancy of parking bays. Each one of the databases 20, 21 can be in the form of a one or more tables in one or more relational databases, files on a file system or any other suitable digital representation of data enabling the functionality of embodiments presented herein.

The vehicle determination device 1 further comprises an I/O interface 62 for communicating with external and/or internal entities, such as the automated key cabinet 3. Optionally, the I/O interface 62 also includes a user interface.

Other components of the vehicle determination device 1 are omitted in order not to obscure the concepts presented herein.

Fig 4 shows one example of a computer program product 90 comprising computer readable means. On this computer readable means, a computer program 91 can be stored, which computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program product 64 of Fig 3. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A method for providing access to a vehicle, the method being performed by a vehicle determination device (1), the method comprising:
receiving (40) a request signal, indicating a set of parameters of a desired vehicle;
determining (42), from a first database (20), a plurality of candidate vehicles (2a-c) matching the set of parameters of the desired vehicle;
determining (44), from a second database (21), for each one of the candidate vehicles (2a-c), a number of blocking vehicles (6) blocking access to the respective candidate vehicle;
selecting (46) the candidate vehicle with the fewest number of blocking vehicles; and
transmitting (48) a key release signal to an automated key cabinet to release a physical key to the selected vehicle and to release physical keys to any blocking vehicles that block access for the selected vehicle, to thereby provide access to the selected vehicle.

2. The method according to claim 1, wherein the determining (44) the number of blocking vehicles comprises, for each one of the candidate vehicles (2a-c):
determining blocking parking bays that, if occupied, would block the respective candidate vehicle; and
determining how many of the blocking parking bays are occupied with a vehicle.

3. A vehicle determination device (1), for providing access to a vehicle, the vehicle determination device (1), comprising:
a processor (60); and
a memory (64) storing instructions (67) that, when executed by the processor, cause the vehicle determination device (1), to:
receive a request signal, indicating a set of parameters of a desired vehicle;
determine, from a first database (20), a plurality of candidate vehicles (2a-c) matching the set of parameters of the desired vehicle;
determine, from a second database (21), for each one of the candidate vehicles (2a-c), a number of blocking vehicles (6) blocking access to the respective candidate vehicle;
select the candidate vehicle with the fewest number of blocking vehicles; and
transmit a key release signal to an automated key cabinet to release a physical key for the selected vehicle and to release physical keys to any blocking vehicles that block access for the selected vehicle, to thereby provide access to the selected vehicle.

4. The vehicle determination device (1) according to claim 3, wherein the instructions to determine the number of blocking vehicles comprise instructions (67) that, when executed by the processor, cause the vehicle determination device (1), to, for each one of the candidate vehicles (2a-c):
determine blocking parking bays that, if occupied, would block the respective candidate vehicle; and
determine how many of the blocking parking bays are occupied with a vehicle.

5. A computer program (67, 91) for providing access to a vehicle, the computer program comprising computer program code which, when executed on a vehicle determination device (1), causes the vehicle determination device (1), to:
receive a request signal, indicating a set of parameters of a desired vehicle;
determine, from a first database (20), a plurality of candidate vehicles (2a-c) matching the set of parameters of the desired vehicle;
determine, from a second database (21), for each one of the candidate vehicles (2a-c), a number of blocking vehicles (6) blocking access to the respective candidate vehicle;
select the candidate vehicle with the fewest number of blocking vehicles; and
transmit a key release signal to an automated key cabinet to release a physical key for the selected vehicle and to release physical keys to any blocking vehicles that block access for the selected vehicle, to thereby provide access to the selected vehicle.

6. A computer program product (64, 90) comprising a computer program according to claim 5 and a computer readable means comprising non-transitory memory in which the computer program is stored.

## Patentansprüche

1. Verfahren zum Bereitstellen von Zugang zu einem Fahrzeug, wobei das Verfahren durch eine Fahrzeugbestimmungsvorrichtung (1) durchgeführt wird, wobei das Verfahren umfasst:
Empfangen (40) eines Anforderungssignals, das einen Satz von Parametern eines gewünschten Fahrzeugs angibt;
Bestimmen (42), aus einer ersten Datenbank (20), einer Vielzahl von Kandidatenfahrzeugen (2a-c), die dem Satz von Parametern des gewünschten Fahrzeugs entsprechen;
Bestimmen (44), aus einer zweiten Datenbank (21), für jedes der Kandidatenfahrzeuge (2a-c) einer Anzahl von blockierenden Fahrzeugen (6), die Zugang zum jeweiligen Kandidatenfahrzeug blockieren;
Auswählen (46) des Kandidatenfahrzeugs mit der geringsten Anzahl blockierender Fahrzeuge; und
Senden (48) eines Schlüsselfreigabesignals an einen automatisierten Schlüsselschrank, um einen physischen Schlüssel zu dem ausgewählten Fahrzeug freizugeben und um physische Schlüssel für alle blockierenden Fahrzeuge freizugeben, die Zugang für das ausgewählte Fahrzeug blockieren, um dadurch Zugang zum ausgewählten Fahrzeug bereitzustellen.

2. Verfahren nach Anspruch 1, wobei das Bestimmen (44) der Anzahl blockierender Fahrzeuge für jedes der Kandidatenfahrzeuge (2a-c) umfasst:
Bestimmen von blockierenden Parkbuchten, die, falls sie belegt sind, das jeweilige Kandidatenfahrzeug blockieren würden; und
Bestimmen, wie viele der blockierenden Parkbuchten mit einem Fahrzeug belegt sind.

3. Fahrzeugbestimmungsvorrichtung (1) zum Bereitstellen von Zugang zu einem Fahrzeug, wobei die Fahrzeugbestimmungsvorrichtung (1) umfasst:
einen Prozessor (60); und
einen Speicher (64), der Anweisungen (67) speichert, die, wenn sie von dem Prozessor ausgeführt werden, die Fahrzeugbestimmungsvorrichtung (1) veranlassen:
ein Anforderungssignal, das einen Satz von Parametern eines gewünschten Fahrzeugs angibt, zu empfangen;
aus einer ersten Datenbank (20) eine Vielzahl von Kandidatenfahrzeugen (2a-c) zu bestimmen, die dem Satz von Parametern des gewünschten Fahrzeugs entsprechen;
aus einer zweiten Datenbank (21) für jedes der Kandidatenfahrzeuge (2a-c) eine Anzahl von blockierenden Fahrzeugen (6) zu bestimmen, die Zugang zum jeweiligen Kandidatenfahrzeug blockieren;
das Kandidatenfahrzeug mit der geringsten Anzahl blockierender Fahrzeuge auszuwählen; und
ein Schlüsselfreigabesignal an einen automatisierten Schlüsselschrank zu senden, um einen physischen Schlüssel für das ausgewählte Fahrzeug freizugeben und physische Schlüssel für jegliche Fahrzeuge freizugeben, die einen Zugang für das ausgewählte Fahrzeug blockieren, um dadurch Zugang zu dem ausgewählten Fahrzeug bereitzustellen.

4. Fahrzeugbestimmungsvorrichtung (1) nach Anspruch 3, wobei die Anweisungen, um die Anzahl blockierender Fahrzeuge zu bestimmen, Anweisungen (67) umfassen, die, wenn sie von dem Prozessor ausgeführt werden, die Fahrzeugbestimmungsvorrichtung (1) veranlassen, für jedes der Kandidatenfahrzeuge (2a-c):
blockierende Parkbuchten zu bestimmen, die, falls sie belegt sind, das jeweilige Kandidatenfahrzeug blockieren würden; und
zu bestimmen, wie viele der blockierenden Parkbuchten mit einem Fahrzeug belegt sind.

5. Computerprogramm (67, 91) zum Bereitstellen von Zugang zu einem Fahrzeug, wobei das Computerprogramm einen Computerprogrammcode umfasst, der, wenn er in einer Fahrzeugbestimmungsvorrichtung (1) ausgeführt wird, die Fahrzeugbestimmungsvorrichtung (1) veranlasst:
ein Anforderungssignal, das einen Satz von Parametern eines gewünschten Fahrzeugs angibt, zu empfangen;
aus einer ersten Datenbank (20) eine Vielzahl von Kandidatenfahrzeugen (2a-c) zu bestimmen, die dem Satz von Parametern des gewünschten Fahrzeugs entsprechen;
aus einer zweiten Datenbank (21) für jedes der Kandidatenfahrzeuge (2a-c) eine Anzahl von blockierenden Fahrzeugen (6) zu bestimmen, die Zugang zum jeweiligen Kandidatenfahrzeug blockieren;
das Kandidatenfahrzeug mit der geringsten Anzahl blockierender Fahrzeuge auszuwählen; und
ein Schlüsselfreigabesignal an einen automatisierten Schlüsselschrank zu senden, um einen physischen Schlüssel für das ausgewählte Fahrzeug freizugeben und physische Schlüssel für jegliche Fahrzeuge freizugeben, die einen Zugang für das ausgewählte Fahrzeug blockieren, um dadurch Zugang zu dem ausgewählten Fahrzeug bereitzustellen.

6. Computerprogrammprodukt (64, 90), das ein Computerprogramm nach Anspruch 5 und ein computerlesbares Mittel umfasst, das einen nichtflüchtigen Speicher umfasst, auf dem das Computerprogramm gespeichert ist.

## Revendications

1. Procédé permettant de fournir l'accès à un véhicule, le procédé étant mis en œuvre par un dispositif de détermination de véhicule (1), le procédé comprenant :
la réception (40) d'un signal de demande, indiquant un ensemble de paramètres d'un véhicule souhaité ;
la détermination (42), à partir d'une première base de données (20), d'une pluralité de véhicules candidats (2a-c) correspondant à l'ensemble de paramètres du véhicule souhaité;
la détermination (44), à partir d'une seconde base de données (21), pour chacun des véhicules candidats (2a-c), d'un nombre de véhicules bloquants (6) bloquant l'accès au véhicule candidat respectif ;
la sélection (46) du véhicule candidat avec le nombre le plus faible de véhicules bloquants ; et
l'émission (48) d'un signal de libération de clé à une armoire à clés automatisée pour libérer une clé physique du véhicule sélectionné et pour libérer des clés physiques de tous les véhicules bloquants qui bloquent l'accès au véhicule sélectionné, pour ainsi fournir l'accès au véhicule sélectionné.

2. Procédé selon la revendication 1, dans lequel la détermination (44) du nombre de véhicules bloquants comprend, pour chacun des véhicules candidats (2a-c) :
la détermination de places de stationnement bloquantes qui, si elles étaient occupées, bloqueraient le véhicule candidat respectif ; et
la détermination du nombre de places de stationnement bloquantes qui sont occupées par un véhicule.

3. Dispositif de détermination de véhicule (1), pour fournir l'accès à un véhicule, le dispositif de détermination de véhicule (1) comprenant :
un processeur (60) ; et
une mémoire (64) stockant des instructions (67) qui, lorsqu'elles sont exécutées par le processeur, amènent le dispositif de détermination de véhicule (1) à :
recevoir un signal de demande, indiquant un ensemble de paramètres d'un véhicule souhaité ;
déterminer, à partir d'une première base de données (20), une pluralité de véhicules candidats (2a-c) correspondant à l'ensemble de paramètres du véhicule souhaité ;
déterminer, à partir d'une seconde base de données (21), pour chacun des véhicules candidats (2a-c), un nombre de véhicules bloquants (6) bloquant l'accès au véhicule candidat respectif ;
sélectionner le véhicule candidat avec le nombre le plus faible de véhicules bloquants ; et
émettre un signal de libération de clé à une armoire à clés automatisée pour libérer une clé physique du véhicule sélectionné et pour libérer des clés physiques de tous les véhicules bloquants qui bloquent l'accès au véhicule sélectionné, pour ainsi fournir l'accès au véhicule sélectionné.

4. Dispositif de détermination de véhicule (1) selon la revendication 3, dans lequel les instructions pour déterminer le nombre de véhicules bloquants comprennent des instructions (67) qui, lorsqu'elles sont exécutées par le processeur, amènent le dispositif de détermination de véhicule (1) à, pour chacun des véhicules candidats (2a-c) :
déterminer les places de stationnement bloquantes qui, si elles étaient occupées, bloqueraient le véhicule candidat respectif ; et
déterminer le nombre de places de stationnement bloquantes qui sont occupées par un véhicule.

5. Programme informatique (67, 91) permettant de fournir l'accès à un véhicule, le programme informatique comprenant un code de programme informatique qui, lorsqu'il est exécuté sur un dispositif de détermination de véhicule (1), amène le dispositif de détermination de véhicule (1) à :
recevoir un signal de demande, indiquant un ensemble de paramètres d'un véhicule souhaité ;
déterminer, à partir d'une première base de données (20), une pluralité de véhicules candidats (2a-c) correspondant à l'ensemble de paramètres du véhicule souhaité ;
déterminer, à partir d'une seconde base de données (21), pour chacun des véhicules candidats (2a-c), un nombre de véhicules bloquants (6) bloquant l'accès au véhicule candidat respectif ;
sélectionner le véhicule candidat avec le nombre le plus faible de véhicules bloquants ; et
émettre un signal de libération de clé à une armoire à clés automatisée pour libérer une clé physique du véhicule sélectionné et pour libérer des clés physiques de tous les véhicules bloquants qui bloquent l'accès au véhicule sélectionné, pour ainsi fournir l'accès au véhicule sélectionné.

6. Produit de programme informatique (64, 90) comprenant un programme informatique selon la revendication 5 et un moyen lisible par ordinateur comprenant une mémoire non transitoire dans laquelle le programme informatique est stocké.
